# EUROPÄISCHE PATENTSCHRIFT

(11) **EP 1 478 553 B1**
(45) Veröffentlichungstag und Bekanntmachung des Hinweises auf die Patenterteilung: **19.04.2006**
(21) Anmeldenummer: 03706555.4
(22) Anmeldetag: 22.02.2003
(51) Int. Cl.: B60R 21/01, B60R 21/34

(54) **VERFAHREN ZUR ANSTEUERUNG EINER ZUM FUSSGÄNGERSCHUTZ AUFSTELLBAREN MOTORHAUBE BEI EINEM KRAFTFAHRZEUG**
METHOD FOR CONTROLLING AN AUTOMOTIVE ENGINE HOOD THAT CAN BE INCLINED FOR THE PURPOSE OF PEDESTRIAN PROTECTION
PROCEDE DE COMMANDE D'UN CAPOT DE MOTEUR D'UN VEHICULE POUVANT ETRE RELEVE DE MANIERE A ASSURER LA PROTECTION D'UN PIETON

(30) Priorität: 25.02.2002 DE 10207985
(43) Veröffentlichungstag der Anmeldung: 24.11.2004
(73) Patentinhaber: DaimlerChrysler AG, 70567 Stuttgart (DE)
(72) Erfinder: BAUMANN, Karl-Heinz, 71149 Bondorf (DE); BOLL, Wolf, 71384 Weinstadt (DE); FRANK, Thomas, 70619 Stuttgart (DE); MICHALAK, Frank, 71120 Grafenau (DE); RATHJE, Klaus, 71157 Hildrizhausen (DE)
(86) Internationale Anmeldenummer: PCT/EP2003/001817
(87) Internationale Veröffentlichungsnummer: WO 2003/070526

(56) Entgegenhaltungen:
- EP-A- 0 914 992
- EP-A- 1 176 062
- DE-A- 2 711 338
- DE-A- 19 721 565
- DE-C- 19 922 459
- DE-U- 20 106 478

## Beschreibung

Die Erfindung betrifft ein Verfahren zur Ansteuerung einer zum Fußgängerschutz aufstellbaren Motorhaube bei einem Kraftfahrzeug gemäß dem Oberbegriff das Patentanspruchs 1.

Aus der DE 201 06 478 U1 geht ein gattungsbildendes Verfahren als bekannt hervor. Wenn Unfallsensoren einen Unfall mit einem Fußgänger erkennt oder erwartet, wird durch einen Haubenantrieb die Motorhaube um ein gewisses Maß angehoben. Dadurch steht mehr Deformationsraum für die Motorhaube zur Verfügung, womit der Fußgängerschutz verbessert wird. Die Anhebung erfolgt mittels eines Kraftspeichers, z.B. einer Sprungfeder. Nach erfolgter Auslösung wird die Motorhaube selbsttätig durch einen Elektromotor in die Grundstellung zurückgefahren. Aufgrund der reversiblen Ausgestaltung des Haubenantrieb kann dieser mehrfach ohne dazwischenliegenden Werkstattaufenthalte ausgelöst werden. Dies ist deshalb von Vorteil, weil die Unfallsensoren nicht immer zweifelsfrei einen Unfall mit einem Fußgänger detektieren. Als Unfallsensoren sind Aufprallsensoren oder Annäherungssensoren auf Radar-, Infrarot- oder Ultraschallbasis bekannt.

Aus der DE 27 11 338 A1 ist ein von einem aufprallempfindlichen Sensor gesteuerter Luftsack im hinteren Bereich der Motorhaube bekannt, der sich gefüllten Zustand über den Bereich des Windlaufs legt und Scheibenwischerteile, einen großen unteren Bereich der Windschutzscheibe und die hintere Kante der Fronthaube abpolstert. In einer Weiterbildung kann der Luftsack auch zur Anhebung der Fronthaube im hinteren Bereich dienen. Der Aufprallsensor ist als Kontaktsensor beschrieben, wobei zur Auslösung auch andere Parameter des Fahrtverlaufs herangezogen werden können, beispielsweise das Blockieren der Räder oder eine bestimmte Bremsverzögerung oder ein bestimmter Bremsdruck.

Aus der EP 0914 992 A1 ist ein Fahrzeug mit einer hinten aufstellbaren Fronthaube bekannt, die mittels eines nicht reversiblen, gezündeten Aktuators aufstellbar ist, wenn durch einen im Stoßfänger angeordneten Kontaktsensor ein Aufprall erkannt wird. Um Fehlauslösungen zu vermeiden wird eine Aufstellung nur in einem bestimmten Geschwindigkeitsbereich zugelassen, wobei für die Berechnung der Fahrzeuggeschwindigkeit aus den Raddrehzahlen ein aufwendiger Algorithmus beschrieben wird, welcher auch im Falle, dass bei einer Bremsung auf glatter Fahrbahn mit blockierenden Rädern und Eingriff eines Antiblockiersystems (ABS) eine Abschätzung der Eigengeschwindigkeit im Zeitpunkt des Aufpralls bereitstellt.

Aus der DE 199 22 459 C1, welches die Merkmale des Oberbegriffs des unabhängigen Anspruchs 1 zeigt, ist ein Fahrzeug mit einer reversibel aufstellbaren Fronthaube bekannt, welche in einem für gefährliche Fußgängerkollisionen typischen Geschwindigkeitsbereich von 10km/h bis 50 km/h präventiv angehoben wird und bei Verlassen des Geschwindigkeitsbereiches wieder abgesenkt wird. Des weiteren ist vorgesehen, dass eine bei höheren Geschwindigkeit abgesenkte Fronthaube bei starker Bremsverzögerung angehoben werden kann. Dies hat den Nachteil, dass das Anheben der Motorhauben bei hohen Geschwindigkeiten zu Irritationen des Fahrers führen kann. Ein weiterer Nachteil ist, dass bei bestimmten Fahrtroutenprofilen es zu einem häufigen Anheben und Absenken der Fronthaube kommt, was ebenfalls für den Fahrer irritierend sein kann.

Auf dem Gebiet des Insassenschutzes ist z.B. aus der DE 198 01 009 C1 oder der DE 199 62 800 A1 bekannt, bereits vor dem Aufprallzeitpunkt einen elektromotorischen Gurt-Vorstraffer anzusteuern, welcher die Insassen in eine optimierte Position bringt, damit die beim Aufprall gezündeten Insassenschutzmittel wie pyrotechnischer Gurtstraffer oder Airbag ihre Schutzwirkung besser entfalten können. Um einen drohenden Aufprall zu erkennen ist es bekannt Fahrerreaktionen auszuwerten. Als Fahrerreaktion, welche auf einen bevorstehenden Unfall schließen lässt wird, wird z.B. eine heftige Bremspedalbetätigung herangezogen, mit der eine Notbremsung angefordert wird. In diesem Fall löst ein Brems-Assistenz-System (BAS) eine Notbremsung mit maximaler Bremskraft aus. Die Notsituation wird erkannt, wenn die Betätigungsgeschwindigkeit des Bremspedals eine Schwelle überschreitet. Auf eine Notsituation kann aber auch durch Auswertung der Betätigungen anderer Bedienelemente im Fahrzeug wie Gaspedal- oder Lenkrad oder auch aus Körperreaktionen geschlossen werden, wobei typischerweise entsprechend aufbereitete Signale mit Schwellwerten verglichen werden.

Aufgabe der Erfindung ist es, denn Unfallschutz zu verbessern und die Kosten zu verringern.

Diese Aufgabe wird mit den Merkmalen des Anspruchs 1 gelöst. Erfindungsgemäß werden Fahrerreaktionen hinsichtlich des Vorliegens einer Notsituation, welche auf einen möglicherweise bevorstehenden Unfall mit einem Fußgänger schließen lässt, ausgewertet. Bei Erkennen einer solchen Notsituation wird die Motorhaube in die Schutzstellung angehoben. Die Auswertung der Fahrerreaktionen hat den Vorteil, dass die Auslösung frühzeitig erfolgen kann.

Die Auswertung der Fahrerreaktionen kann ergänzend zur Auswertung einer vorausschauenden Annäherungssensorik erfolgen, womit in manchen Fällen frühzeitiger ausgelöst oder durch das zusätzliche Signal die Auslösesicherheit erhöht werden kann.

Die Auswertung der Fahrerreaktionen kann auch allein zur Auslösung der Motorhaubenanhebung herangezogen werden. Indem auf eine Aufprall- oder Annäherungssensorik verzichtet wird, kann ein Fußgängerschutz bereits mit geringem technischem Aufwand erreicht werden.

Die Auswertung der Fahrerreaktionen ermöglicht gegenüber Aufprallsensoren eine frühzeitige Auslösung der Motorhaubenanhebung. Weil ein Teil des Anhebungsweges bereits vor dem Aufprall zurückgelegt wird, kann ein größerer Verformungsweg für die Motorhaube bereitgestellt werden, womit der Fußgängerschutz verbessert wird.

Die Auswertung der Fahrerreaktionen kann sich auf die Auswertung des Bremsverhalten stützen, wobei in vorteilhafter Weise auf die auf dem CAN-Bus bereitstehenden ABS- und BAS-Signale zurückgegriffen werden kann. Die Auswertung der Fahrerreaktionen kann aber auch das Lenkverhalten, Blickverhalten, Abstützungsverhalten, Fahrer-Gewichts- oder Positionsverlagerung oder mittels Spracherkennung identifizierbare Schrecklaute usw. einbeziehen.

Eine besonders vorteilhafte Anwendung des erfindungsgemäßen Verfahrens ergibt sich bei Verwendung eines reversiblen Haubenantrieb, weil die Auswertung der Fahrerreaktionen auch zu unbegründeten Fehlauslösungen führen kann. Um mögliche Irritationen des Fahrers durch eine sich bei schneller Fahrt anhebende Motorhaube zu vermeiden, sollte das Anheben der Motorhaube bei Fahrgeschwindigkeiten oberhalb einer Grenzgeschwindigkeit von z.B. 50 km/h unterdrückt werden.

Die Erfindung ist gleichermaßen für - in Fahrtrichtung betrachtet - vorn oder hinten angeschlagene Hauben anwendbar. Die Anhebung kann auch vorn und hinten erfolgen, wobei die jeweiligen Anhebungen durch unterschiedliche Signale ausgelöst und unterschiedliche Haubenantriebe (Aktoren) bewirkt werden können. Z.B. kann vorn eine Anhebung irreversibel (z.B. pyrotechnisch) durch einen Unfallsensor gesteuert erfolgen, während hinten reversibel, z.B. durch eine entriegelte Sprungfeder mit elektromotorischen Rückholantrieb, durch ein ABS- und/oder BAS-Signal ausgelöst wird. Damit kann insgesamt mehr Deformationsweg bereitgestellt werden, indem ein Teil des Haubenanhebungsweges vor dem Aufprall zurückgelegt wird. Als einfacher reversibler Aktor ist auch ein Elektromotor mit Exzenter denkbar.

## Patentansprüche

1. Verfahren zur Ansteuerung einer zum Fußgängerschutz aufstellbaren Motorhaube bei einem Kraftfahrzeug mit einem elektrisch ansteuerbaren, reversiblen Haubenantrieb, welcher ein Anheben der Motorhaube in eine angehobene Schutzstellung bewirkt,
**dadurch gekennzeichnet,**
**dass**
- Fahrerreaktionen hinsichtlich des Vorliegens einer Notsituation, welche auf einen bevorstehenden Unfall mit einem Fußgänger schließen lässt, ausgewertet werden und bei Erkennen einer solchen Notsituation und
- sofern die Fahrzeuggeschwindigkeit eine Grenzgeschwindigkeit nicht überschreitet
- der Haubenantrieb derart angesteuert wird, dass die Motorhaube in die Schutzstellung angehoben wird, unabhängig davon, ob es zu einem Kontakt mit dem Fußgänger kommt.

2. Verfahren nach Anspruch 1,
**dadurch gekennzeichnet,**
**dass** das Bremsverhalten ausgewertet wird, insbesondere unter Heranziehung der Bremspedalbetätigungsgeschwindigkeit, der Bremskraft, Bremsdruck, Bremsverzögerung oder des Blockierverhaltens der Räder.

3. Verfahren nach Anspruch 1,
**dadurch gekennzeichnet,**
**dass** die Signale eines Bremsassistenzsystems (BAS) und/oder eines Antiblockiersystems (ABS) herangezogen werden.

4. Verfahren nach Anspruch 1,
**dadurch gekennzeichnet,**
**dass** die Anhebung durch ein ABS-Signal und/oder ein BAS-Signal ausgelöst wird.

5. Verfahren nach einem der vorangehenden Ansprüche 1,
**dadurch gekennzeichnet,**
**dass** zusätzlich ein Unfallsensor die Umgebung des Fahrzeugs hinsichtlich des Vorliegens einer Verkehrssituation, welche auf einen stattfindenden oder bevorstehenden Unfall mit einem Fußgänger schließen lässt, beobachtet und bei Erkennen einer solchen Verkehrssituation ein zweiter Haubenantrieb derart angesteuert wird, dass die Motorhaube angehoben wird.

## Claims

1. Method for actuating an automotive engine hood which can be raised in order to protect a pedestrian, having an electrically actuable, reversible engine hood drive which causes the engine hood to be raised into a raised protective position, **characterized in that**
- driver reactions are evaluated with respect to the presence of an emergency situation which implies that an accident involving a pedestrian is imminent, and when such an emergency situation is detected and
- as long as the velocity of the vehicle does not exceed a limiting velocity
- the engine hood drive is actuated in such a way that the engine hood is raised into the protective position, irrespective of whether contact with the pedestrian occurs.

2. Method according to Claim 1, **characterized in that** the braking behaviour is evaluated, in particular using the speed of activation of the brake pedal, the braking force, the braking pressure, the braking deceleration or the locking behaviour of the wheels.

3. Method according to Claim 1, **characterized in that** the signals of a braking assistant system (BAS) and/or of an antilock brake system (ABS) are used.

4. Method according to Claim 1, **characterized in that** the raising process is triggered by an ABS signal and/or a BAS signal.

5. Method according to one of the preceding claims, **characterized in that**, in addition, an accident sensor observes the surroundings of the vehicle with respect to the presence of a traffic situation which implies that an accident involving a pedestrian is taking place or is imminent, and when such a traffic situation is detected a second engine hood drive is actuated in such a way that the engine hood is raised.

## Revendications

1. Procédé pour la commande d'un capot moteur d'un véhicule pouvant être relevé pour la protection d'un piéton avec un entraînement de capot réversible et à commande électrique, qui entraîne un soulèvement du capot moteur dans une position de protection relevée, **caractérisé en ce que**
- des réactions du conducteur par rapport à la présence d'une situation d'urgence, qui permet de conclure à un accident imminent avec un piéton, sont analysées et en cas de détection d'une telle situation d'urgence et
- dans la mesure où la vitesse du véhicule ne dépasse pas une vitesse limite
- l'entraînement du capot est activé de telle sorte que le capot moteur est soulevé dans la position de protection, indépendamment du fait qu'on arrive à un contact avec le piéton.

2. Procédé selon la revendication 1, **caractérisé en ce que** le comportement au freinage est analysé, en particulier avec l'utilisation de la vitesse d'actionnement de la pédale de frein, de la force de freinage, de la pression de freinage, du retard de freinage ou du comportement au blocage des roues.

3. Procédé selon la revendication 1, **caractérisé en ce que** les signaux d'un système d'assistance de freinage (BAS) et/ou d'un système antiblocage (ABS) sont utilisés.

4. Procédé selon la revendication 1, **caractérisé en ce que** l'élévation est déclenchée par un signal ABS et/ou un signal BAS.

5. Procédé selon l'une quelconque des revendications précédentes 1, **caractérisé en ce que**, en supplément un capteur d'accident observe l'environnement du véhicule par rapport à la présence d'une situation de circulation, qui permet de conclure à un accident ayant lieu ou imminent avec un piéton, et en cas de détection d'une telle situation de circulation, un second entraînement de capot est activé de telle sorte que le capot moteur est soulevé.
